# EUROPEAN PATENT SPECIFICATION

(11) **EP 2 350 413 B1**
(45) Date of publication and mention of the grant of the patent: **17.08.2016**
(21) Application number: 09756363.9
(22) Date of filing: 22.10.2009
(51) Int. Cl.: E05F 5/02, F16F 9/36, F16F 9/02, F16F 9/32, E05F 5/08, E05F 5/10

(54) **DAMPER**
DÄMPFER
AMORTISSEUR

(30) Priority: 23.10.2008 SI 200800250
(43) Date of publication of application: 03.08.2011
(73) Proprietor: Titus d.o.o. Dekani, 6271 Dekani (SI)
(72) Inventor: SVARA, Valter, 6310 Izola (SI); KOZLOVIC, Danjel, 6271 Dekani (SI); PECAR, David, 6000 Koper (SI)
(74) Representative: Golmajer Zima, Marjanca
(86) International application number: PCT/SI2009/000057
(87) International publication number: WO 2010/047665

(56) References cited:
- EP-A2- 1 162 338
- WO-A1-2007/116273
- FR-E- 63 679
- US-A- 5 927 448

## Description

### Subject of Invention

The subject of the present invention is a one-way hydraulic or pneumatic damper of motion of items, preferably furniture items, especially door wings, said damper comprising a cylindrical housing closed at one end, in which a piston rod with a piston and a valve portion for the control of a medium flow within a damper, and a compression spring are arranged.

### Technical Problem

The technical problem of the present invention is how to conceive such motion damper that would have a simple and economical design and would be adequate for mass and automated production by simultaneously meeting the requirements for a quality two-way motion damping.

### Prior Art

FR 63.679 (Peignen) discloses a door damper having a two-stage piston rod arranged within a hydraulic cylinder. A piston is fastened by a nut and discs to said piston rod, said piston separating the interior of the hydraulic cylinder into two closed chambers, comprising an active medium, like oil. The external diameter of the piston is somewhat smaller than the interior diameter of the cylinder in order to allow outflow of oil from one chamber into another while the piston moves due to an external force exerted on the piston rod. The piston is centred on the piston rod, which reaches into the central recess of the piston with its free threaded end. A valve portion for the regulation of damping is embedded within the piston. To meet this purpose, conduits are arranged in radial direction within said piston. Each conduit leads with one end to a shaped groove arranged on the external circumference of the piston and with the other end to the central recess of the piston. An O-ring is located within the groove. The width of the groove is larger than the width/thickness of the O-ring, so the O-ring may move within the groove in direction parallel to the main axis of the cylinder. The direction of movement of the O-ring depends on the direction of force exerted on the piston rod. Due to an increased pressure within an individual chamber, the O-ring within the groove gets displaced to a certain side, thus opening or closing the openings of radial conduits. When the openings of conduits are open, the oil flow is more significant and consequently damping less significant.

JP 3-125043 describes a pneumatic damper, wherein the action of the valve embedded within a piston of the damper is controlled by an O-ring. The piston rod and the piston are uniform, wherein said piston is formed into a hollow cylindrical element provided with two mutually spaced circumferentially extending attachments forming type of groove. In direction rectangular to this groove the piston comprises in direction of the main axis a specially shaped groove of a changing width and opened at one side to the cylinder chamber. Within the piston groove there is a movable O-ring arranged. The O-ring moves within said groove in axial direction as a function of direction from which external force is exerted. It partially closes a specially shaped groove, herewith increasing / decreasing the flow of a medium past the piston and thus determining the scope of damping in the operating / return movement.

A document US 5,927,448 describes a damper providing shock absorbing in a single tube structure with two sections of different diameters within which a piston and two-part piston rod are arranged. The piston is formed into a cylindrical shape with an end wall on one end and a peripheral wall connected to the end wall. The piston rod has two flanges between which the end wall of the piston is arranged and determining the stroke of the piston. The piston is formed with a piston rod insertion through-hole which together with other holes in the end wall provides passage for a viscous fluid. The piston also has orifices on the peripheral wall to enable a transfer of the viscous fluid from one section of the cylinder to the another as the diameters of both sections are different. The construction of the damper enables shock absorbing whereby a damping of a piston motion is in an inverse ratio to the number of orifices and their diameters. Above described damper involves many parts which demand precise manufacturing and consequently quite complicated composing.

A disadvantage of the solutions described hereinbefore lies in that numerous high precision work operations are needed in the production of such product, especially in the manufacturing of grooves and conduits, which is very difficult to achieve in mass production and is not acceptable from the economical point of view. By using standard O-rings having a quite wide measuring tolerance field it is very difficult to ensure a certain clearance for the outflow of the medium in order to provide for a certain level of damping. The increase in the reliability of operation within a narrow field calls for O-rings manufactured in a narrower tolerance field or for an introduction of an additional control as to dimensions, which is, however, not acceptable for the products of this type.

Further, the implementation of a two-stage piston rod is also problematic, especially because the end with the piston must be even threaded. The requirements for tolerance of the valve and piston part are very high due to the mode of operation, which is extremely difficult to be achieved in case of a large number of constituent parts.

The disadvantages of imprecise operation as a consequence of the valve being controlled by O-rings are done away with in DE 1 809 854U, where damping is achieved by way of longitudinal grooves having a changing cross-section arranged on the internal circumference of the cylinder. Some damping during return movement is achieved by a valve part having a valve disk adapted in its form to the piston rod and a ring valve seat arranged on the piston and with a conduit arranged near the piston rod. During a work stroke a valve disk abuts with a ring seal upon the valve seat thus closing the conduit at the piston rod. A compression spring that returns the piston rod to its initial position is arranged on the piston rod in a way to abut with its piston-side end upon special attachments spaced from the piston. During a return stroke first the piston rod with the valve disk and the ring seal move away from the valve seat on the piston. The conduit at the piston rod thus opens and the medium can flow therethrough into the adjacent space having a lower pressure. Only when the plugs with the compression spring abut upon the piston, the latter moves as well. Damping in return stroke is less considerable. The damper of the described type comprises demanding constituent parts that need to be manufactured with high precision on high precision machines. The manufacturing of the piston rod is utterly problematic, it is namely a multi-stage piston rod with additional elements arranged thereon that enable the valve to move away.

### Solution to the Technical Problem

The described technical problem is solved by a hydraulic or pneumatic damper of the invention, preferably a one-sided damper formed in a cylindrical housing closed at one end, wherein the requirement for damping from two sides is solved by a piston rod, a piston with a valve part and a ring seal arranged thereon within a circumferential groove, all elements being axially arranged. The piston rod formed as a straight rod of a constant cross-section engages with a centrally arranged blind hole on the valve part of the piston and therewith forms a separable engagement, wherein the front side of the piston rod abuts upon the bottom of the blind hole. The cross-section of the blind hole of the piston exceeds the surface of the cross-section of the piston rod in a way that a formed conduit is formed between the piston and the piston rod serving for the work medium to flow from one chamber into another. The size of difference of cross-sections is determined by the size of the external force exerted on the damper and the required level of damping connected therewith.

On the circumference of the piston there is a circumferential groove to receive a ring seal to delimit the flow of the medium between the piston and the housing and at least one groove arranged transversally to the circumferential groove in axial direction towards each piston end for the flow of the medium from one chamber into another. The internal diameter of the ring seal exceeds the internal diameter of the circumferential groove and the ring seal moves in axial direction due to the movement of the medium as a consequence of a different pressure within each chamber thus closing and opening each longitudinal conduit extending towards the cover-end of the piston.

Reliable and high-quality two-sided variable damping in the damper of the invention is achieved by merely using three component parts that do not need any additional connecting parts for mutual connection and operation. Moreover, no precise mechanical processing with expensive and demanding machines is needed for the manufacturing of each constituent part. To the contrary, two out of the three constituent parts, i.e. the piston rod and the ring seal, are standard elements and do not need any further processing.

Since axially designed, the damper of the invention is also adequate for automatic assembly on assembly lines, which still further contributes to the simplicity and economic efficiency of the damper.

The invention will now be described in more detail by way of an embodiment and enclosed drawings, showing in:

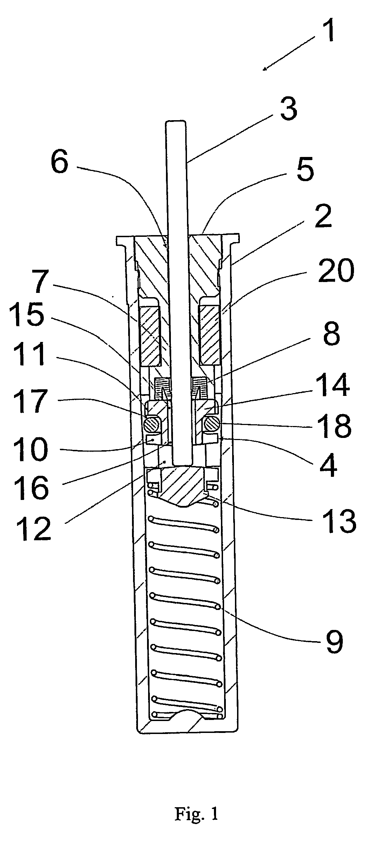

- Fig. 1: longitudinal cross-section of the damper, first embodiment of the invention

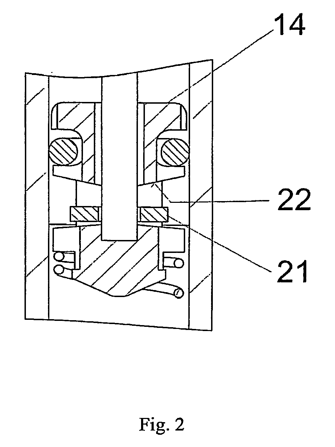

- Fig. 2: longitudinal cross-section of the damper piston, second embodiment of the invention

A one-sided hydraulic or pneumatic damper 1 of the invention comprises a cylindrical housing 2 closed at one end, in which a piston rod 3 is arranged in direction of the main axis, said piston rod 3 protruding through a cover 5 closing the other end of said housing 1 and having on its other end that reaches into said housing a piston 4 with a valve part as a constituent part. Said cover 5 closes said cylindrical housing 2 and is provided with a central through hole 6 running through an integrally formed attachment 7 that reaches into the interior of the cylinder and functions as a guide for said piston rod 3. Said piston rod 3 is sealed at the cover by a seal 8 of the piston rod. Within said housing 2, between its closed end and said piston 4 there is further a compression spring 9 that returns said piston 4 with said piston rod 3 to initial position. Said attachment 7 has a built-in elastic element 20 that equalises the changes in volumes of both chambers by changing its own volume.

Said piston rod 3 is formed as a straight rod of a constant cross-section, wherein the shape of the cross-section of the piston rod is adapted to the needs of further installation of the damper, preferably of a round cross-section.

Said piston 4 divides the interior of the cylinder into two chambers linked by at least one conduit running in longitudinal substantially axial direction. Said uniform piston 4 has an opening 12 extending transversally to the longitudinal axis of the damper, in the embodiment a through hole, and separating said piston into a piston portion 13 and a valve portion 14. The valve portion 14 houses a central hole 15, into which said piston rod 3 engages, the latter abutting with its front side upon said piston portion 13. Said piston rod 3 engages with said hole 15 of said valve portion 14, in the embodiment loosely engages. The cross-section of said hole 15 of said valve portion 14 exceeds the cross-section of said piston rod 3 in a way that a formed piston rod-side conduit 16 is formed between said valve portion 14 and said piston rod 3, said conduit serving as a canal for the work medium, in the embodiment oil, to pass from one chamber into another. The size of the difference in cross-sections is determined by the size of the external force exerted on the damper and the required magnitude of damping linked therewith.

Said valve portion 14 has a circumferential groove 17 arranged radially on the circumference. At least one first groove 10 runs rectangularly to said circumferential groove 17 and in axial direction towards said piston portion 13, said first groove 10 continuing in said piston portion and allowing the oil to pass past said piston portion 13; and at least one second groove 11 runs in axial direction towards said cover 5 to allow outflow of oil to another chamber. Said grooves 10, 11 are mutually not directly connected.

Within said circumferential groove 17 there is an annular seal 18, preferably an O-ring, wherein its internal diameter exceeds the internal diameter of said circumferential groove 17, in order to allow free movement of said O-ring in axial direction. The direction of movement of said O-ring 18 is determined by the direction of oil flow or movement of said piston rod. During a work stroke, i.e. during damping, the O-ring 18 moves in direction towards said cover 5 due to the pressure in the oil and its movement and thus closes the second longitudinal groove 11. The oil may flow into the adjacent chamber only through the piston rod-side conduit 16 and damping is considerable. In return stroke, the O-ring 18 gets displaced towards said piston portion 13, when the oil moves in opposite direction, wherein said O-ring 18 does not close the first groove 10 and the oil flows from the first chamber into the second one along the piston rod-side conduit 16 and the second longitudinal groove 11 and further through the first groove 10. The damping thus obtained is smaller and the movement of the piston 4 and the piston rod 3 in return stroke is therefore quicker.

Damping in a work stroke of the damper may be increased or rather changed by employing an additional elastic element 21, like in the second embodiment. The elastic element 21 having the size of a central through hole as a function of the level of required damping is set on said piston rod 3 and is located in the transversal through opening 12 of said piston 4. Under the action of the oil pressure the elastic element 21 fits the surface 22 of the valve portion 14 and thus partly closes the piston rod-side conduit 16 in dependence of the size of the internal diameter of the hole.

It is understood that a man skilled in the art may think of different embodiments based on the above description without circumventing the essence of the invention defined in the appended claims.

## Claims

1. A hydraulic or pneumatic damper (1) comprising a cylindrical housing (2) closed at one end, in which a piston rod (3) is arranged in direction of the longitudinal axis, said piston rod (3) protruding through a cover (5) closing the other end of said housing and having on its other end that reaches into said housing a piston (4), and between the closed end of said housing (2) and said piston (4) there is a compression spring (9), whereby said piston (4) has an opening (12) running transversally to the longitudinal axis of said damper (1) and separating the piston (4) into a piston portion (13) and a valve portion (14), wherein said valve portion (14) of said piston (4) has a central hole (15), into which said piston rod (3) engages, the surface of the cross-section of said piston rod (3) being smaller than the surface of the cross-section of said hole (15) of said valve portion (14), **characterised in that**
said valve portion (14) has a circumferential groove (17) arranged radially on the circumference, in which groove an annular seal (18) is arranged and rectangularly to said circumferential groove (17) in axial direction at least one first groove (10) and at least one second groove (11) are arranged, wherein each first and second groove (10, 11) are mutually not directly linked and **in that** said central hole (15) and said piston rod (3) form a piston rod-side conduit (16) for fluid flow.

2. Damper as claimed in Claim 1, **characterised in that** said annular seal (18) is preferably an O-ring, wherein its internal diameter exceeds the internal diameter of said circumferential groove (17).

3. Damper as claimed in Claim 1, **characterised in that** said piston rod (3) is formed as a straight rod of a constant cross-section, preferably of a circular cross-section.

4. Damper as claimed in Claim 1, **characterised in that** within said transversal opening (12) of said piston (4) there is an elastic element (21) fitted onto said piston rod (3) and having a central hole of a size which enable the elastic element (21) to partly close the piston rod-side conduit (16).

## Patentansprüche

1. Hydraulischer oder pneumatischer Dämpfer (1), der ein zylindrisches Gehäuse (2) umfasst, das an einem Ende geschlossen ist, in dem eine Kolbenstange (3) in Richtung der Längsachse angeordnet ist, wobei die Kolbenstange (3) durch eine Abdeckung (5), die das andere Ende des Gehäuses abschließt, hervortritt und an ihrem anderen Ende, das in das Gehäuse hineinreicht, einen Kolben (4) aufweist und zwischen dem geschlossenen Ende des Gehäuses (2) und der Kolbenstange (4) eine Druckfeder (9) vorhanden ist, wobei der Kolben (4) eine Öffnung (12) aufweist, die quer zur Längsachse des Dämpfers (1) verläuft und den Kolben (4) in einen Kolbenabschnitt (13) und einen Ventilabschnitt (14) teilt, wobei der Ventilabschnitt (14) des Kolbens (4) ein Mittelloch (15) aufweist, in das die Kolbenstange (3) eingreift und die Oberfläche des Querschnitts der Kolbenstange (3) kleiner als die Oberfläche des Querschnitts des Loches (15) im Ventilabschnitt (14) ist, **dadurch gekennzeichnet, dass**
der Ventilabschnitt (14) eine umlaufende Nut (17) aufweist, die radial an der Peripherie angeordnet ist, wobei in der Nut eine ringförmige Abdichtung (18) angeordnet ist und wobei rechtwinklig zur umlaufenden Nut (17) in Axialrichtung wenigstens eine erste Nut (10) und wenigstens eine zweite Nut (11) angeordnet sind, wobei die erste und die zweite Nut (10, 11) jeweils gegenseitig nicht direkt miteinander verbunden sind und dadurch, dass das Mittelloch (15) und die Kolbenstange (3) eine kolbenstangenseitige Leitung (16) für Flüssigkeitsströmung bilden.

2. Dämpfer nach dem Anspruch 1, **dadurch gekennzeichnet, dass** die ringförmige Abdichtung (18) vorzugsweise ein O-Ring ist, dessen Innendurchmesser den Innendurchmesser der umlaufenden Nut (17) übersteigt.

3. Dämpfer nach dem Anspruch 1, **dadurch gekennzeichnet, dass** die Kolbenstange (3) als gerade Stange mit einem gleichbleibenden Querschnitt, vorzugsweise einem kreisförmigen Querschnitt, gebildet ist.

4. Dämpfer nach dem Anspruch 1, **dadurch gekennzeichnet, dass** innerhalb der Queröffnung (12) des Kolbens (4) ein elastisches Element (21) an der Kolbenstange (3) angebracht ist und ein Mittelloch einer Größe aufweist, die ermöglicht, dass das elastische Element (21) die kolbenstangenseitige Leitung (16) teilweise schließt.

## Revendications

1. Amortisseur (1) hydraulique ou pneumatique comprenant un logement cylindrique (2) fermé à une extrémité, dans lequel une tige de piston (3) est disposée dans la direction de l'axe longitudinal, ladite tige de piston (3) faisant saillie à travers un couvercle (5) fermant l'autre extrémité dudit logement et comportant sur son autre extrémité qui s'étend dans ledit logement un piston (4), et entre l'extrémité fermée dudit logement (2) et ledit piston (4) se trouve un ressort de compression (9), ledit piston (4) comportant une ouverture (12) s'étendant transversalement à l'axe longitudinal dudit amortisseur (1) et divisant le piston (4) en une partie piston (13) et une partie valve (14), ladite partie valve (14) dudit piston (4) comportant un trou central (15), dans lequel est insérée ladite tige de piston (3), la surface de la section transversale de ladite tige de piston (3) étant inférieure à la surface de la section transversale dudit trou (15) de ladite partie valve (14), **caractérisé en ce que**
ladite partie valve (14) comporte une rainure circonférentielle (17) disposée radialement sur la circonférence, rainure dans laquelle est disposé un joint d'étanchéité annulaire (18) et rectangulairement vis-à-vis de ladite rainure circonférentielle (17) dans la direction axiale sont disposées au moins une première rainure (10) et au moins une seconde rainure (11), chaque première et seconde rainure (10, 11) n'étant mutuellement pas reliées directement et **en ce que** ledit trou central (15) et ladite tige de piston (3) forment un conduit côté tige de piston (16) pour un écoulement de fluide.

2. Amortisseur selon la revendication 1, **caractérisé en ce que** ledit joint d'étanchéité annulaire (18) est de préférence un joint torique, son diamètre intérieur étant supérieur au diamètre intérieur de ladite rainure circonférentielle (17).

3. Amortisseur selon la revendication 1, **caractérisé en ce que** ladite tige de piston (3) est réalisée sous la forme d'une tige droite de section transversale constante, de préférence de section transversale circulaire.

4. Amortisseur selon la revendication 1, **caractérisé en ce qu'**à l'intérieur de ladite ouverture transversale (12) dudit piston (4) se trouve un élément élastique (21) ajusté sur ladite tige de piston (3) et comportant un trou central d'une taille permettant à l'élément élastique (21) de fermer partiellement le conduit côté tige de piston (16).
